# EUROPEAN PATENT APPLICATION

(11) **EP 2 144 030 A1**
(43) Date of publication of application: **13.01.2010**
(21) Application number: 08739690.9
(22) Date of filing: 02.04.2008
(51) Int. Cl.: F28F 19/06, F02M 25/07, F28D 9/02, F28F 13/08

(54) **HEAT EXCHANGER, METHOD OF PRODUCING HEAT EXCHANGER, AND EGR SYSTEM**

(30) Priority: 25.04.2007 JP 2007115489
(71) Applicant: IHI Corporation, Tokyo 135-8710 (JP)
(72) Inventor: AKIYOSHI, Ryo, Tokyo 135-8710 (JP); MOCHIZUKI, Chitoshi, Tokyo 135-8710 (JP); YOSHIDA, Takashi, Tokyo 135-8710 (JP)
(74) Representative: Waldren, Robin Michael
(86) International application number: PCT/JP2008/056579
(87) International publication number: WO 2008/132944

(57) **Abstract**

The present invention relates to a heat exchanger including a partitioning plate and flow channels of at least two systems which are partitioned by the partitioning plate, in which the partitioning plate is made of a clad sheet having a base material made of stainless steel or a nickel-based alloy, and a clad layer having brazing properties and corrosion resistance to a corrosive fluid, an entire surface of the base material which is exposed to the flow channel of at least one system being coated by the clad layer. According to the present invention, the heat exchanger, in which the corrosive fluid flows, can be reduced in size, and the performance thereof can be enhanced. Furthermore, it is possible to simplify the manufacturing process of the heat exchanger.

## Description

### TECHNICAL FIELD

The present invention relates to a heat exchanger which has a flow channel through which a corrosive fluid flows, a method of manufacturing a heat exchanger, and an EGR system including the heat exchanger.
Priority is claimed on Japanese Patent Application No. 2007-115489, filed April 25, 2007, the content of which is incorporated herein by reference.

### BACKGROUND ART

Due to increased environmental awareness, an EGR (Exhaust Gas Recirculation) system has been proposed in order to suppress generation of NOx in an internal combustion engine (in particular, a diesel engine). With such an EGR system, oxygen concentration in a combustion chamber of the internal combustion engine is decreased by cooling a part of combustion exhaust gas discharged from the internal combustion engine and returning the part to an intake side of the internal combustion engine, thereby trying to reduce NOx.
Such an EGR system includes an EGR cooler (heat exchanger) for cooling and returning combustion exhaust gas to an intake side of an internal combustion engine. The EGR cooler cools the combustion exhaust gas by performing heat exchange between the combustion exhaust gas and cooling water supplied from the outside.

By the way, in the heat exchanger such as the EGR cooler which has a flow channel through which a corrosive fluid such as combustion exhaust gas flows, the flow channel needs to have corrosion resistance to the corrosive fluid. For this reason, a conventional heat exchanger includes a thick partitioning plate for separating the flow channel, through which the corrosive fluid flows, and a flow channel, through which the cooling water flows, so as to ensure corrosion resistance of the heat exchanger.

Such a heat exchanger is manufactured by brazing members (partitioning plates or fins) constituting the flow channel. More specifically, the partitioning plate or fin is formed by pressing a metal (stainless steel) sheet, and after the partitioning plate and the fin are assembled and a brazing material is disposed to a desired portion of the partitioning plate or fin, the brazing material is subjected to a heating process (brazing process) in a vacuum atmosphere, thereby manufacturing the heat exchanger.
[Patent Document 1] Japanese Unexamined Patent Application, First Publication No. 2005-49007
[Patent Document 2] Japanese Unexamined Patent Application, First Publication No. 2004-317072
[Patent Document 3] Japanese Unexamined Patent Application, First Publication No. 2004-335846

However, a conventional heat exchanger has the following problems.
(1) Since the partitioning plate is formed thick in order to ensure corrosion resistance, it is difficult to reduce the size and enhance the performance of the heat exchanger.
(2) Since there is a need for a process for disposing the brazing material on the members constituting the flow channel, such as the partitioning plate, the process of manufacturing the heat exchanger is cumbersome and complicated. Also, the performance of the manufactured heat exchanger is difficult to stabilize.
   For example, in the case where powder brazing material in powder form is used as the brazing material, the powder brazing material is mixed with a binder and is applied by spraying, and then the brazing material is disposed by volatilizing a part of the binder. However, it is difficult to apply the powder brazing material mixed with the binder in uniform thickness. For this reason, it is difficult to dispose the brazing material uniformly, and more brazing material than is necessary is used in order to reliably perform the brazing. In addition, the binder is attached to peripheral portions after the volatilization of the binder. This requires a vacuum heating process used for volatilizing the binder and a vacuum heating process used for brazing, which makes the time necessary for heating treatment longer, thus increasing manufacturing costs.
   Alternatively, in the case of utilizing thin sheets of brazing material as the brazing material, it is necessary to cut the large sheet brazing material into shapes corresponding to that of the arrangement portion, and thus the process of manufacturing the heat exchanger is cumbersome and complicated.

### DISCLOSURE OF INVENTION

Therefore, the present invention has been made in view of the above-mentioned problems, and objects of the present invention are as follows:
(1) to reduce the size and enhance the performance of a heat exchanger which has a flow channel through which a corrosive fluid flows; and
(2) to simplify the manufacturing of a heat exchanger which has a flow channel through which the corrosive fluid flows.

A heat exchanger according to the present invention includes a partitioning plate and flow channels of at least two systems which are partitioned by the partitioning plate, in which the partitioning plate is made of a clad sheet having a base material made of stainless steel or a nickel-based alloy, and a clad layer having brazing properties and corrosion resistance to a corrosive fluid, an entire surface of the base material which is exposed to the flow channel of at least one system being coated by the clad layer.

In the heat exchanger according to the present invention, the partitioning plate is made of the clad sheet having corrosion resistance and brazing properties.

In the heat exchanger according to the present invention, a fin may be installed in the flow channel, and the fin may be made of the clad sheet.
In the heat exchanger according to the present invention, the partitioning plate may be formed in the shape of a fin.

In the heat exchanger according to the present invention, the corrosive fluid may be combustion exhaust gas from an internal combustion engine, and cooling water may flow through the flow channel other than the flow channel through which the combustion exhaust gas flows.

In the heat exchanger according to the present invention, the clad layer may include at least chromium, silicon, phosphorus, and nickel as components.

In the heat exchanger according to the present invention, the clad layer may consist of 13 to 18 wt% of chromium, 3 to 4 wt% of silicon, and 4 to 7 wt% of phosphorus, and the remainder being nickel and inevitable impurities.

A method of manufacturing a heat exchanger according to the present invention is a method of manufacturing a heat exchanger including a partitioning plate and flow channels of at least two systems which are partitioned by the partitioning plate, the method including: a clad sheet forming step of forming a clad sheet having a base material made of stainless steel or a nickel-based alloy, and a clad layer having brazing properties and corrosion resistance to a corrosive fluid, an entire surface of the base material which is exposed to the flow channel of at least one system being coated by the clad layer; a partitioning plate forming step for forming the partitioning plate by using the clad sheet; and a flow channel forming step for forming the flow channels of at least two systems by using the formed partitioning plate through a brazing process, by which the clad layer of the partitioning plate is molten.

In the method of manufacturing a heat exchanger according to the present invention, the partitioning plate is made of the clad sheet having corrosion resistance and brazing properties.

In the method of manufacturing a heat exchanger according to the present invention, the method may include a fin forming step for forming a fin by using the clad sheet, and the flow channel forming step may utilize the formed partitioning plate and the formed fin and forms the flow channels of at least two systems through the brazing process by which the clad layers of the partitioning plate and the fin are molten.
In the method of manufacturing a heat exchanger according to the present invention, in the partitioning plate forming step, the partitioning plate may be formed in the shape of a fin.

In the method of manufacturing a heat exchanger according to the present invention, the clad sheet forming step may include a compression-bonding step for compressively bonding mixture powder, which is obtained by mixing alloy powder including at least any one of chromium, silicon, and phosphorus as its components, and nickel powder, to the base material.

In the method of manufacturing a heat exchanger according to the present invention, the mixture powder may include the nickel powder of 10 wt% or more.

In the method of manufacturing a heat exchanger according to the present invention, a shape of the nickel powder may have a plurality of protrusions.

In the method of manufacturing a heat exchanger according to the present invention, a composition ratio of a sum total of the mixture powder including the plurality of kinds of components may include 13 to 18 wt% of chromium, 3 to 4 wt% of silicon, and 4 to 7 wt% of phosphorus, and the remainder being nickel and inevitable impurities.

In the method of manufacturing a heat exchanger according to the present invention, the clad sheet forming step may include a heating step for heating the clad sheet after the compression-bonding step.

In the method of manufacturing a heat exchanger according to the present invention, it is preferable that the mixture powder including the plurality of kinds of components may include at least BNi-7 (JIS Standard Z3265; nickel braze material).

An EGR (Exhaust Gas Recirculation) system according to the present invention includes an internal combustion engine, an intake flow channel for supplying combustible gas to at least the internal combustion engine, an exhaust flow channel for discharging combustion exhaust gas from the internal combustion engine, and an EGR cooler for cooling a part of the combustion exhaust gas and returning the part to the intake flow channel, in which the heat exchanger according to the present invention is used as the EGR cooler.

In the EGR system according to the present invention, the heat exchanger, including the partitioning plate made of at least the clad sheet, of the present invention may be used as the EGR cooler.

With the heat exchanger according to the present invention, the partitioning plate is formed of the clad sheet having the clad layer on the entire surface of the flow channel of at least one system, which is exposed in the flow channel, among the fluid channels of at least two systems. For this reason, the surface of the partitioning plate exposed in the flow channel of one system has corrosion resistance and brazing properties. Therefore, it is not necessary to increase the thickness of the partitioning plate in order to ensure corrosion resistance. The heat exchanger, in which the corrosive fluid flows, can be reduced in size, and the performance can be enhanced. Also, it is not necessary to dispose a brazing material on the partitioning plate, and the manufacturing of the heat exchanger can be simplified.

With the method of manufacturing a heat exchanger according to the present invention, the partitioning plate is made of the clad sheet. The clad sheet includes the clad layer disposed over the entire surface of the flow channel of at least one system which is exposed in the flow channel, among the fluid channels of at least two systems. For this reason, the surface of the partitioning plate exposed in the flow channel of one system has corrosion resistance and brazing properties. Therefore, it is possible to easily manufacture a heat exchanger with the flow channels having corrosion resistance. In other words, with the method of manufacturing a heat exchanger according to the present invention, it is possible to simplify manufacturing of a heat exchanger in which the corrosive fluid flows.

With the EGR system according to the present invention, since the heat exchanger, including the partitioning plate made of at least the clad sheet, of the present invention is used as the EGR cooler, the size of the heat exchanger can be reduced and the performance can be enhanced.

### BRIEF DESCRIPTION OF THE DRAWINGS

FIG. 1 is a perspective view schematically illustrating the configuration of a heat exchanger according to a first embodiment of the present invention.
FIG. 2 is a view illustrating a cross section of the heat exchanger according to the first embodiment of the present invention.
FIG. 3 is a perspective view of a clad sheet utilized in the heat exchanger according to the first embodiment of the present invention.
FIG. 4 is a cross-sectional view of the clad sheet utilized in the heat exchanger according to the first embodiment of the present invention.
FIG. 5 is a view schematically illustrating the configuration of an apparatus for manufacturing the clad sheet utilized in the heat exchanger according to the first embodiment of the present invention.
FIG. 6 is a view explaining a shape of nickel powder.
FIG. 7 is a view explaining a method of manufacturing a heat exchanger according to the first embodiment of the present invention.
FIG. 8 is a view explaining the method of manufacturing a heat exchanger according to the first embodiment of the present invention.
FIG. 9 is a view explaining the method of manufacturing a heat exchanger according to the first embodiment of the present invention.
FIG. 10 is a view schematically illustrating a cross section of a heat exchanger according to a second embodiment of the present invention.
FIG. 11 is a view schematically illustrating an EGR cooler according to a third embodiment of the present invention.

### DESCRIPTION OF THE REFERENCE SYMBOLS

- 1:: CLAD SHEET
- 2:: METAL PLATE (BASE MATERIAL)
- 3:: CLAD LAYER
- F:: MIXTURE POWDER
- F1:: ALLOY POWDER
- F2:: NICKEL POWDER
- F3:: SILICON POWDER
- F4:: BNi-7 POWDER
- Y:: MOLTEN PORTION
- 100, 200:: HEAT EXCHANGER
- 110,220:: CORROSIVE GAS FLOW CHANNEL (FLOW CHANNEL)
- 120, 230:: COOLING WATER FLOW CHANNEL (FLOW CHANNEL)
- 130:: FIN
- 140, 210:: PARTITIONING PLATE
- 300:: EGR SYSTEM
- 310:: INTERNAL COMBUSTION ENGINE
- 320:: INTAKE PIPE
- 330:: EXHAUST PIPE
- 350:: EGR COOLER

### BEST MODE FOR CARRYING OUT THE INVENTION

Hereunder, a heat exchanger, a method of manufacturing the heat exchanger, and an EGR system according to an embodiment of the present invention will be described with reference to accompanying drawings. In the accompanying drawings, the scale of each member is properly altered in order to let each member have a discernable size.

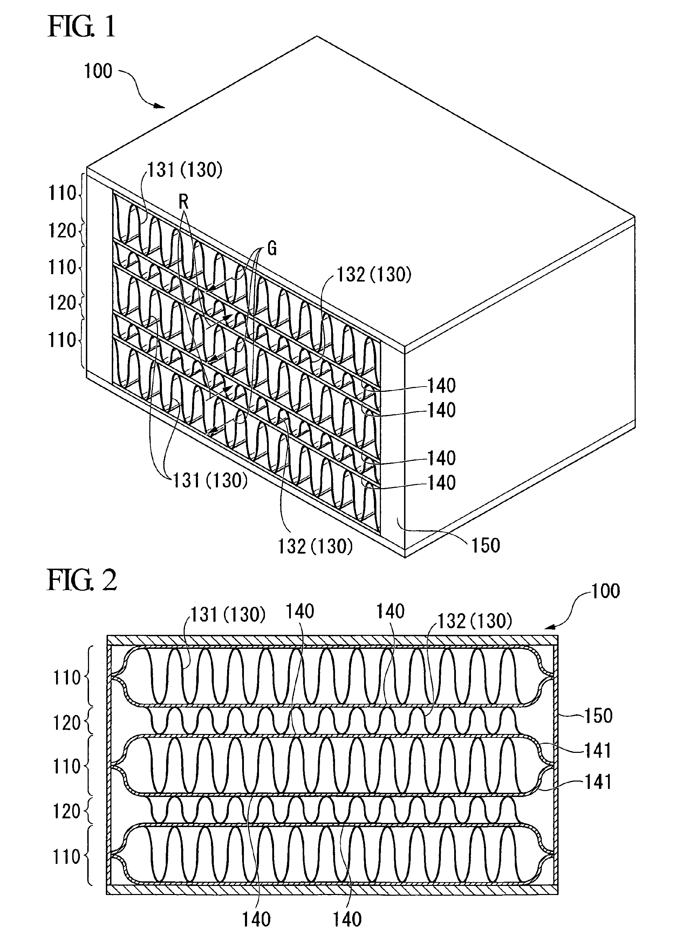

<First Embodiment> FIG. 1 is a perspective view schematically illustrating the configuration of a heat exchanger 100 according to a first embodiment. FIG. 2 is a view schematically illustrating a cross section of the heat exchanger 100 according to the first embodiment. As shown in the drawings, the heat exchanger 100 according this embodiment includes corrosive gas flow channels 110 through which corrosive gas G such as combustion exhaust gas of an internal combustion engine flows, and cooling water flow channels 120 through which cooling water R flows, the corrosive gas flow channels and the cooling water flow channels being alternatively stacked on each other in plural layers inside of an external frame 150.

The corrosive gas flow channel 110 and the cooling water flow channel 120 are partitioned from each other by a partitioning plate 140 which is provided as a boundary of the respective channels. In other words, the plurality of partitioning plates 140 are disposed in the vertical direction inside the external frame 150, and it is configured such that spaces between the partitioning plates 140 alternately serve as the corrosive gas flow passages 110 and the coolant water flow passages 120. As shown in FIG. 2, edge portions 141 of the respective partitioning plates 140 are pairwise joined to those of the nearest partitioning plates 140, the edge portions of the respective pair being bent to the opposite directions, and a closed space formed by the above joint is employed as the corrosive gas flow channel 110. Meanwhile, an opened space, which is formed by joining the edge portions 141 of each partitioning plate 140, is formed into a closed space by being closed by the external frame 150, and the closed space is employed as the cooling water flow channel 120.

The corrosive gas flow channel 110 and the cooling water flow channel 120 are provided therein with fins 130 shaped by pressing a flat plate in a wave shape. The height of the fin 130 is respectively set in compliance with a height of the corrosive gas flow channel 110 or the height of the cooling water flow channel 120. That is, the fin 131 (130) installed in the corrosive gas flow channel 110 has a height set in compliance with the height of the corrosive gas flow channel 110, while the fin 132 (130) installed in the cooling water flow channel 120 has a height set in compliance with the height of the cooling water flow channel 120. Each of the fins 130 has a top portion and a bottom portion which are abutted against and joined to the inner wall of each channels 110 and 120, that is, the partitioning plates 140.

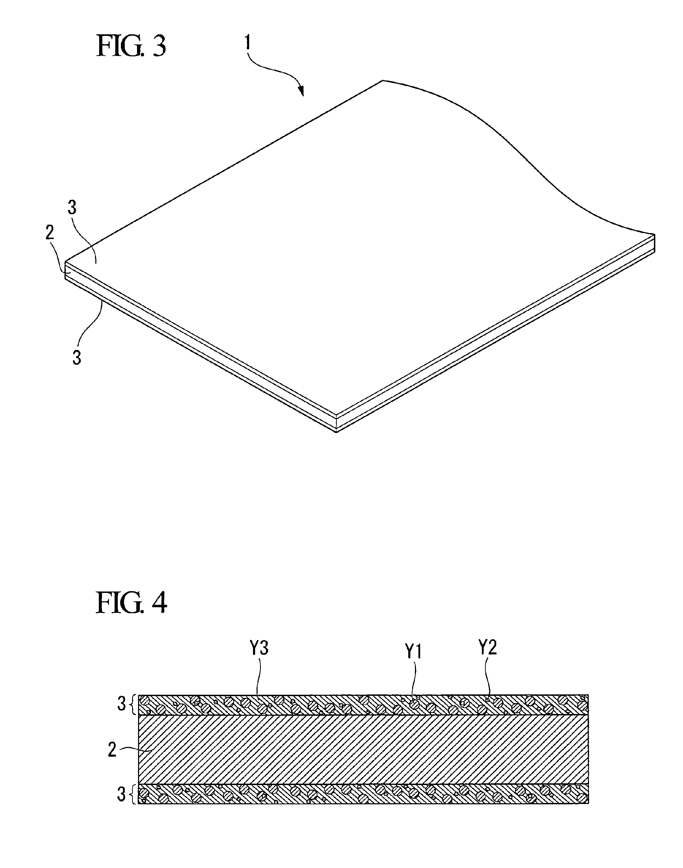

In the heat exchanger 100 according to the present embodiment, the partitioning plate 140 and the fin 130 are made by using a clad sheet 1. FIG. 3 is a perspective view of the clad sheet 1 according to the present embodiment. FIG. 4 is an enlarged sectional-view of the clad sheet 1 according to the present embodiment. As shown in the drawings, the clad sheet 1 is constituted of a sheet-shaped metal plate 2 which serves as a base material, and clad layers 3 compressively bonded onto both entire surfaces of the base material.

The metal plate 2 is made of SUS (stainless steel), preferably, SUS304, SUS316, SUS410 or SUS444. The clad layer 3 includes an alloy phase Y1 (metal phase) containing nickel, chromium, silicon, and phosphorus, a nickel phase Y2, and a molten phase Y3 (alloy phase, metal phase), where BNi-7 (JIS Standard Z3265; nickel brazing material) is molten and then cured.
The clad layer 3 consists of nickel, chromium, silicon, phosphorus, and inevitable impurities (not shown).

The alloy phase Y1 is a phase formed by partially melting alloy powder including chromium, silicon, and phosphorus as its components, with the remainder being nickel.
Chromium is substance used to improve corrosion resistance of the clad sheet 1. Silicon and phosphorus are substance to improve brazing properties of the clad sheet 1. Since there is the alloy phase Y1 including chromium, silicon and phosphorus as its components in the clad layer 3, the clad sheet 1 according to the present embodiment has corrosion resistance and brazing properties.

The nickel phase Y2 is a phase formed by partially melting metal powder consisting of nickel which is pure metal of high ductility. Since there is a phase consisting of nickel which is pure metal of high ductility in the clad layer 3, the clad sheet 1 according to the present embodiment has a high degree of freedom in processing.

The molten phase Y3 is formed by melting BNi-7, as described above, and is filled between the alloy phase Y1 and the nickel phase Y2. The melting point of the molten phase Y3 is the lowest, as compared with those of the alloy phase Y1 and the nickel phase Y2, and is, preferably, 1150°C or less. The metal plate 2 used as the base material and the clad layer 3 are fused together by melting the molten phase Y3. In other words, the metal plate 2 and the clad layer 3 are bonded to each other, without requiring an adhesive, in the clad sheet 1 according to the present embodiment.
As is generally known, BNi-7 is a nickel-based alloy containing approximately 10 wt% of phosphorus.

As seen from the above, the clad layer 3 is composed of the alloy phase Y1 formed by partially melting the alloy powder including chromium, silicon and phosphorus as its component, with the reminder including nickel, and the molten phase Y3 formed by melting BNi-7 (alloy). In other words, the clad layer 3 includes two alloy phases of different compositions.

Also, the clad layer 3 has a composition ratio, which is obtained by taking the mean of the entire clad layer 3, of 13 wt% of chromium, 4 wt% of silicon, and 6 wt% of phosphorus, and the remainder being nickel and inevitable impurities.

In the clad sheet 1, 13 wt% of chromium is contained in the clad layer 3.
The clad layer 3 is formed on both entire surfaces of the metal plate 2. For this reason, the clad layer 3 exercises corrosion resistance to prevent corrosion of the clad sheet 1 itself.
In addition, 4 wt% of silicon and 6 wt% of phosphorus are contained in the clad layer 3 of the clad sheet 1. Therefore, the clad layer 3 has sufficient strength of brazing material, and is able to perform brazing at a low temperature. In other words, the clad layer 3 has superior brazing properties.
That is, the clad sheet 1 has corrosion resistance and brazing properties. Accordingly, it is not necessary to dispose an additional brazing sheet or the like, and it is possible to omit treatment involved in processing and disposing the brazing sheet.

Furthermore, in the clad sheet 1, there is the nickel phase Y2 having high ductility in the clad layer 3. Therefore, the clad layer 3 is softened, as compared with a clad layer where nickel, chromium, silicon, phosphorus, and inevitable impurities are mixed in the same composition ratio. As a result, the clad sheet 1 according to the present embodiment has a high degree of freedom in processing.

Also, in the clad layer 1, the clad layer 3 is fused with the metal plate 2 used as the base material. In other words, the metal plate 2 and the clad layer 3 are fused together without using an adhesive.
For this reason, it is possible to omit a degreasing process in the joining process in which the clad sheet 1 according to the present invention is brazed.

In addition, in the clad sheet 1, the clad layer 3 is formed on both entire surfaces of the metal plate 2, as described above. Therefore, the whole clad sheet 1 has corrosion resistance. In a conventional manner, since a brazing material is adhered to only a brazed portion of the metal plate or a brazing material sheet is disposed on only the brazed portion, a thickness of the metal plate itself has to be formed thick in order to ensure corrosion resistance for other portions thereof, to which the brazing material is not adhered or on which the brazing material sheet is not disposed. Since the whole of the clad sheet 1 according to the present invention has corrosion resistance, it is possible to suppress the thickness of the metal plate itself. Consequently, for example, apparatuses manufactured by using the clad sheet 1 can be reduced in size or weight.

In the heat exchanger 100 according to the present embodiment, the partitioning plate 140 and the fin 130 are made of the above-described clad sheet 1. In other words, the clad layer 3 having corrosion resistance and brazing properties is formed on the whole of the surface coming in contact with the corrosive gas G passing through the corrosive gas flow channel 110 (including the surface of corrosive gas (corrosive fluid) side of the metal plate 2 (base material) of the clad sheet 1).
Therefore, the partitioning plate 140 and the fin 130 have corrosion resistance to the corrosive gas G, like the clad sheet 1.

In the heat exchanger 100 with this configuration, the corrosive gas G of high temperature flows through the corrosive gas flow channel 110, while the cooling water R of low temperature flows through the cooling water flow channel 120. Indirect heat exchange happens between the corrosive gas G and the cooling water R via the partitioning plate 140 and the fin 130, so that the corrosive gas G is cooled and discharged.

With the heat exchanger 100 according to the present embodiment, the partitioning plate 140 and the fin 130 are made of the clad sheet 1 with the clad layer 3 formed on both surfaces thereof, whereby the clad layer 3 has corrosion resistance and brazing properties. For this reason, it is not necessary to increase the thickness of the partitioning plate in order to ensure corrosion resistance, like a conventional heat exchanger, and it is possible to reduce the thickness of the partitioning plate 140 and the fin 130, as compared with a conventional heat exchanger. Consequently, the heat exchanger 100 according to the present embodiment has good performance, and is compact.

Also, with the heat exchanger 100 according to the present embodiment, both surfaces of the partitioning plate 140 and the fin 130 have brazing properties, and when the partitioning plate 140 and the fin 130 are brazed, it is not necessary to dispose a brazing material on the partitioning plate 140 and the fin 130, thereby the heat exchanger is easily manufactured. This point will be described in detail when a method of manufacturing the heat exchanger 100 is described hereinafter.

The method of manufacturing the heat exchanger 100 according to the present embodiment will now be described.
The method of manufacturing the heat exchanger 100 according to the present embodiment includes a clad sheet forming process, a partitioning plate forming process, a fin forming process, and a brazing process.

First, the clad sheet forming process will be described.

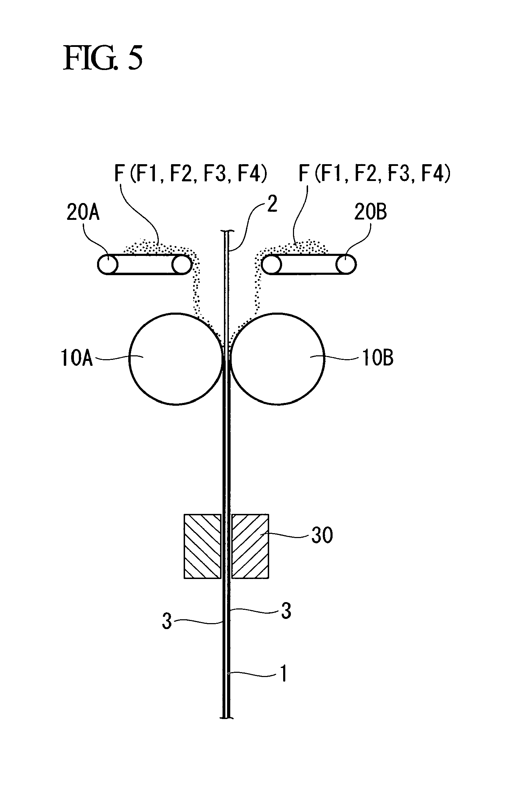

FIG. 5 is a view schematically illustrating the configuration of an apparatus of manufacturing the clad sheet 1. As shown in the drawing, the manufacturing apparatus includes rolling rollers 10A and 10B, belt feeders 20A and 20B, and a heating furnace 30.

The rolling rollers 10A and 10B are disposed opposite to each other in parallel, with circumferences of the rolling rollers being spaced apart from each other at a desired interval. The metal plate 2 is inserted between the rolling rollers from an upward side to a downward side.
The belt feeders 20A and 20B are installed over the rolling rollers 10A and 10B. The belt feeder 20A is installed over the rolling roller 10A so as to supply mixture powder F onto the circumference of the rolling roller 10A. Also, the belt feeder 20B is installed over the rolling roller 10B so as to supply the mixture powder F onto the circumference of the rolling roller 10B.
The heating furnace 30 is installed under the rolling rollers 10A and 10B so as to heat the metal plate 2 fed from the rolling rollers 10A and 10B at a temperature in the vicinity of the melting point of BNi-7 powder described hereinafter.

The mixture powder F supplied from the belt feeders 20A and 20B to the rolling rollers 10A and 10B is composed of alloy powder F1, nickel powder F2, silicon powder F3, and BNi-7 powder F4.

The alloy powder F1 includes 29 wt% of chromium, 4 wt% of silicon, and 6 wt% of phosphorus, as its components, and the remainder being nickel. The alloy powder F1 is metal powder of low ductility, and is made by, for example, a gas atomizing method. The alloy powder F1 contains chromium, silicon, and phosphorus as its components.

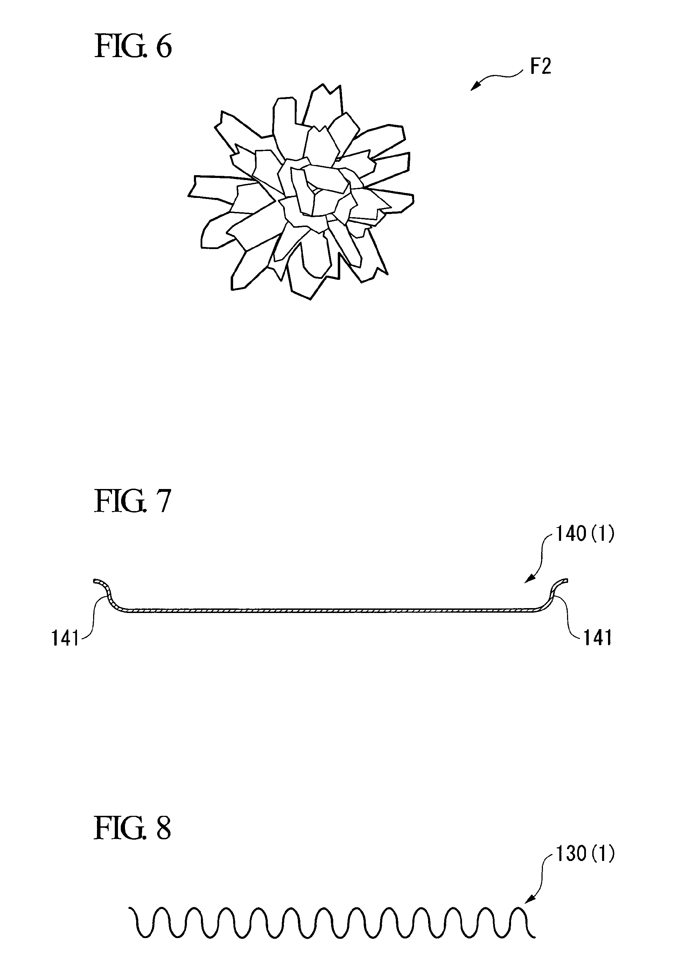

The nickel powder F2 is metal powder consisting of nickel, which is pure metal, of high ductility, and serves as a binder for compression-bonding the alloy powder F1 onto the metal plate 2. Preferably, the nickel powder F2 is, for example, carbonyl Ni powder with a plurality of protrusions, as shown in FIG 6. By using the nickel powder F2 having such a shape, adherence properties between the nickel powder F2 and the allow powder F1 is improved due to the protrusions, and the alloy powder F1 can be compressively bonded more firmly onto the metal plate 2. The nickel powder F2 of 10 wt% or more is contained in the mixture powder F.

The silicon powder F3 is metal powder consisting of silicon, and is added to adjust a component ratio of the clad layer 3, that is, to increase silicon contained in the clad layer 3.

The composition ratio of the mixture powder is identical to that of the clad layer 3, that is, the mixture powder includes 13 wt% of chromium, 4 wt% of silicon, and 6 wt% of phosphorus, and the remainder being nickel and inevitable impurities.

With the manufacturing apparatus constituted as described above, the mixture powder F is supplied from the belt feeders 20A and 20B to the circumference of each of rolling rollers 10A and 10B. The mixture powder F supplied on the circumference of each of rolling rollers 10A and 10B is extended by rolling (compression-bonded) onto each surface of the metal plate 2 by further rotation of the rolling rollers 10A and 10B. In other words, a compression-bonding process is performed, in which the mixture powder F is compressively bonded onto the metal plate 2 by the rolling rollers 10A and 10B.
In this embodiment, the nickel powder F2 is contained in the mixture powder F. For this reason, the nickel powder F2 is deformed by rolling of the rolling rollers 10A and 10B, and serves as a binder for fixing the alloy powder F1 onto the metal plate 2. Accordingly, the alloy powder F1 including chromium, silicon and phosphorus as its components can be compressively bonded onto the metal plate 2, without using an adhesive containing a resin in a conventional way.

Then, the metal plate 2 having both entire surfaces compressively bonded with the mixture powder F is heated in the heating furnace 30 at a temperature in the vicinity of the melting point of the BNi-7 powder F4. The BNi-7 powder F4 having the lowest melting point is molten by the heating.
The alloy powder F1 and the nickel powder F2 are partially molten by the melting of the BNi-7 powder. Also, the silicon powder F3 is molten by the melting of the BNi-7 powder. After the respective powder F1 to F4 is molten and then cooled, as shown in FIG. 4, the clad layer 3 composed of the alloy phase Y1, the nickel phase Y2 and the molten phase Y3 is formed.
Note that the clad sheet is subjected to reheating (a vacuum heating treatment) at brazing. Therefore, the clad layer including the plurality of metal phases comes to have more uniformity.

The clad sheet 1 shown in FIGS. 3 and 4 is formed by the above processes.
With the method of forming the clad sheet 1, the mixture powder F, in which the alloy powder F1 exercising corrosion resistance and brazing properties, and the nickel powder F2 exercising adherence properties resulted from the ductility are mixed, is compressively bonded onto the metal plate 2. Accordingly, when the alloy powder F1 having corrosion resistance and brazing properties is compressively bonded onto the metal plate 2, it is possible to firmly fix the allow powder F1 onto the metal plate 2.

According to the method of forming the clad sheet 1, the mixture powder F contains the nickel powder F2 of 10 wt% or more. In such a case, the alloy powder F1 is properly fixed to the metal plate 2. For this reason, the method of manufacturing the clad sheet 1 according to the present embodiment can properly fix the alloy powder F1 to the metal plate 2.

According to the method of manufacturing the clad sheet 1, since the nickel powder F2 is, for example, carbonyl Ni powder with a plurality of protrusions, adherence properties between the nickel powder F2 and the allow powder F1 are improved due to the protrusions, and the alloy powder F1 can be more firmly fixed to the metal plate 2.
It is possible to suppress peeling of the mixture powder F from the metal plate 2 by more firmly fixing the alloy powder F1 to the metal plate 2.

According to the method of forming the clad sheet 1, the clad layer 3 is formed by melting the BNi-7 powder F4. The BNi-7 powder has a low melting point (about 900°C). Therefore, it is possible to suppress the heating temperature to about 900°C, and to suppress oxidization of chromium or silicon.

The partitioning plate forming process is a process for forming the partitioning plate 140 from the clad sheet 1 by pressing the clad sheet 1, which is manufactured in the clad sheet forming process, so as to bend the edge portion 141, as shown in FIG. 7.
The fin forming process is a process for forming the fin 130 by pressing the flat-shaped clad sheet 1, which is formed in the clad sheet forming process, in a wave shape, as shown in FIG. 8.

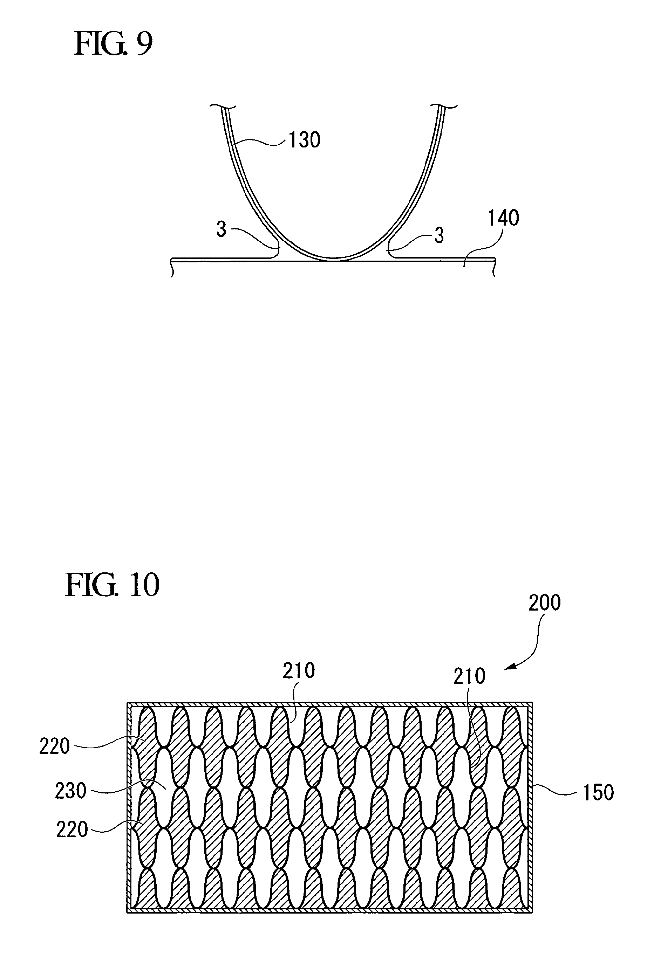

The brazing process is a process for heating the partitioning plates 140 and the fins 130 which are accommodated in the external frame 150, at a predetermined temperature (vacuum heat treatment) and then cooling the partitioning plates and the fins to braze and firmly fix the partitioning plates 140, the fins 130 and the external frame 150 to each other. The brazing process utilizes the partitioning plates 140 and the fins 130 each including the clad layer 3 having brazing properties, so that the partitioning plates 140, the fins 130 and the external frame 150 are brazed and firmly fixed to each other.
When the partitioning plate 140 and the fin 130 are heated, a molten solution which is generated by melting a melting portion Y of the clad layer 3 and the alloy powder F1 is drawn close to the joined portion of the partitioning plates 140 or the jointed portion between the partitioning plate 140 and the fin 130 due to a capillary phenomenon. Therefore, for example, at the joined portion of the partitioning plates 140, the clad layer 3 becomes thicker at portions where the clad sheets 1 are brazed with each other, as shown in FIG. 9. However, it never happens that all the melting solution is attracted to brazing portions, leading to lack of the clad layer at other portions on the clad sheet 1. Consequently, corrosion resistance can be ensured on all portions in the corrosive gas flow channel 110 and the cooling water flow channel 120.

The heat exchanger 100 shown in FIGS. 1 and 2 is manufactured by the above process.
With the method of manufacturing the heat exchanger 100 according to the present embodiment, the heat exchanger 100 is manufactured by forming the partitioning plate 140 and the fin 130 using the clad sheet 1 including the clad layer 3 having corrosion resistance and brazing properties, and performing a brazing treatment by using the partitioning plate 140 and the fin 130. Therefore, it is not necessary to perform a process for disposing an additional brazing material on the member (partitioning plate 140 or the fin 130) constituting the corrosive gas flow channel 110 or the cooling water flow channel 120. At the same time, it is not necessary to perform a process for volatizing a binder which is needed when the powder brazing material is used, or a process for cutting the sheet brazing material which is needed when the sheet brazing material is used, as in a conventional method of manufacturing a heat exchanger. According to the method of manufacturing the heat exchanger 100 according to the present embodiment, therefore, the manufacturing process can be simplified.

According to the method of manufacturing the heat exchanger 100 according to the present embodiment, since the clad sheet 1 including the clad layer 3 which is formed to have a uniform film thickness due to a rolling treatment is used, it is possible to suppress variation in the thickness of the film which serves as the brazing material, as compared with a conventional method. Accordingly, it is possible to make uniform a channel area of the corrosive gas flow channel 110 and the cooling water flow channel 120, and to mass-produce heat exchangers which stably exercise desired performance.

Also, according to the method of manufacturing the heat exchanger 100 according to the present embodiment, since the clad layer 3 is firmly fixed to the metal plate 2 by the rolling treatment, the metal plate 2 can be subjected to a press process together with the clad layer, that is, the film having brazing properties.
In a conventional method, since the brazing material is not fixed to the metal plate, the metal plate with the brazing material can not be subjected to the press process, and thus, the shape of the metal plate subjected to the press process should be simple in view of a process for attaching the brazing material.
On the other hand, according to the method of manufacturing the heat exchanger 100 according to the present embodiment, the metal plate with the clad layer can be subjected to the press process, and the clad sheet 1 can be subjected to a fine or complicated processing. Accordingly, it is possible to enhance the degree of freedom in the structure of the heat exchanger. For example, according to the method of manufacturing the heat exchanger 100 according to the present embodiment, it is possible to sufficiently ensure a channel area without the channel being crushed even in the case of manufacturing the heat exchanger with a fin pitch of 1 mm or less.

<Second Embodiment> Next, a second embodiment of the present invention will now be described. In the description of the second embodiment, the same elements as those of the first embodiment will be omitted or will be described in brief.

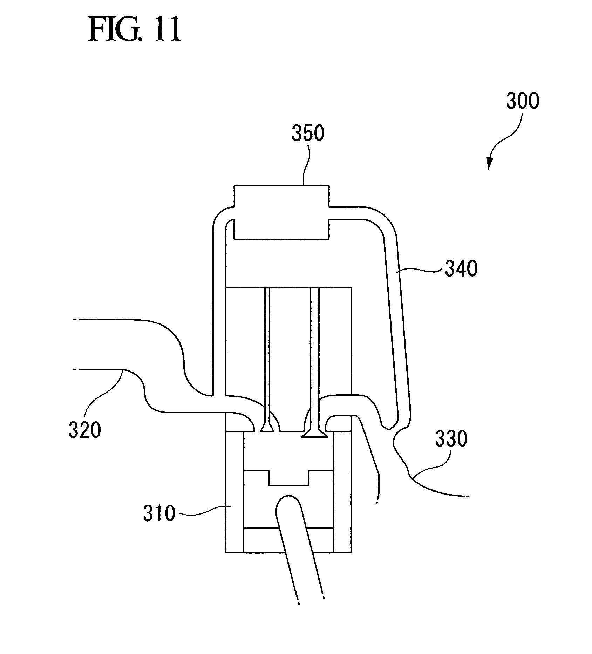

FIG. 10 is a view schematically illustrating a cross section of a heat exchanger 200 according to the second embodiment. As shown in the drawing, the heat exchanger 200 has a configuration in which partitioning plates 210 formed in the shape of a fin are stacked on each other in plural layers inside of the external frame 150. Top portions and bottom portions of the vertically adjacent partitioning plates 210 come in contact with each other, and are brazed to each other to form a plurality of flow channels. The plurality of flow channels are divided into corrosive gas flow channels 220 and cooling water flow channels 230 in a vertically alternating manner. In order to enhance the visibility thereof, the corrosive gas flow channel 220 is shown by hatching in FIG. 11.

Contrary to the first embodiment, the fin 130 is not installed in the corrosive gas flow channel 220 and the cooling water flow channel 230, but the heat exchanger 200 of the present embodiment can exercise a sufficient cooling efficiency, since the partitioning plate 210 is formed in the shape of a fin.

With the heat exchanger 200 according to the second embodiment, the partitioning plate 210 is formed from the clad sheet 1, as is the heat exchanger 100 according to the first embodiment.
Accordingly, in the heat exchanger 200 according to the present embodiment, it is not necessary to increase the thickness of the partitioning plate, like a conventional heat exchanger, in order to ensure corrosion resistance, and thus, it is possible to reduce the size of the heat exchanger and improve the performance thereof, as compared with a conventional heat exchanger.

Also, in the case of manufacturing the heat exchanger 200 having such a configuration, the clad sheet 1 is formed into the fin-shaped partitioning plate 210, and the brazing process is performed by using the partitioning plate 210. When the partitioning plate 210 is brazed, it is not necessary to dispose brazing material on the partitioning plate, thereby easily manufacturing the heat exchanger.

<Third Embodiment> Next, an EGR system according to a third embodiment will now be described, the EGR system being equipped with the heat exchanger 100 according to the first embodiment or the heat exchanger 200 according to the second embodiment.

FIG. 11 is a cross-sectional view schematically illustrating the EGR system 300 according to the present embodiment. As shown in the drawing, the EGR system 300 according to the present embodiment includes an internal combustion engine 310, an intake pipe 320, an exhaust pipe 330, a bypass pipe 340, and an EGR cooler 350.

The internal combustion engine 310 is one for internally combusting air-fuel mixture therein to obtain a power from the combustion energy, and a diesel engine is employed as the internal combustion engine 310 in this embodiment.
The intake pipe 320 is a pipe through which combustion air (combustible gas) to be drawn into the internal combustion engine 310 flows, and is connected to the internal combustion engine 310.
The exhaust pipe 330 is a pipe through which combustion exhaust gas to be discharged from the internal combustion engine 310 flows, and is connected to the internal combustion engine 310.
The bypass pipe 340 is a pipe for connecting the intake pipe 320 with the exhaust pipe 330, and works as a flow channel for returning part of the combustion exhaust gas from the exhaust pipe 330 to the intake pipe 320.
The EGR cooler 350 is installed on an intermediate portion of the bypass pipe 340 so as to cool and discharge the combustible exhaust gas. The heat exchanger 100 according to the first embodiment or the heat exchanger 200 according to the second embodiment is utilized as the EGR cooler 350.

With the EGR system 300, if the combustion air is drawn into the internal combustion engine 310 through the intake pipe 320, the combustion air is mixed with fuel sprayed in the internal combustion engine 310 to generate the air-fuel mixture.
With the air-fuel mixture being combusted in the internal combustion engine 310, the combustion energy is taken out as the power, and simultaneously the combustion exhaust gas generated by combustion is discharged through the exhaust pipe 330. Part of the combustion exhaust gas is returned to the intake pipe 320 through the bypass pipe 340. However, at that time, the combustion exhaust gas is cooled by the EGR cooler 350 installed on the intermediate portion. After that, the cooled combustion exhaust gas is again drawn into the internal combustion engine 310. Therefore, oxygen concentration inside of the internal combustion engine 310 can be decreased, and generation of NOx can be suppressed.

In the EGR system 300 according to the present embodiment, the heat exchanger 100 according to the first embodiment or the heat exchanger 200 according to the second embodiment is utilized as the EGR cooler 350. Therefore, the EGR system 300 according to the present embodiment is compact, and has superior cooling performance.

While preferred embodiments of the heat exchanger, the manufacturing method of the heat exchanger and the EGR system according to the invention have been described above with reference to the accompanying drawings, obviously these are not to be considered as limitative of the invention. Shapes, combinations and the like of the constituent members illustrated above are merely examples, and various modifications based on design requirements and the like can be made without departing from the spirit or scope of the invention.

For example, in the above embodiments, the configuration is described, in which the clad layers 3 are formed on both surfaces of the clad sheet 1, so that the entire surface of the inner wall of the corrosive gas flow channel 110 and the entire surface of the inner wall of the cooling water flow channel 120 have corrosion resistance. However, the present invention is not limited thereto, and the clad layer 3 may be formed on at least the entire surface of the metal plate 2 of the clad sheet 1 on the side which is exposed to the corrosive gas G so that the clad layer 3 exists on at least the entire surface of the inner wall of the corrosive gas flow channel 110.
In particular, since it is not necessary for the inner wall of the cooling water flow channel 120 to have the high corrosion resistance, only the clad layer 3 for the brazing may be provided. Accordingly, the clad sheet with the clad layer 3 formed on only one surface thereof may be employed in either of two partitioning plates constituting the cooling water flow channel 120. By employing the configuration, it is possible to reduce the thickness of the partitioning plate and to lower the manufacturing cost, and thus to manufacture an inexpensive, compact and light heat exchanger.

In the above embodiments, the heat exchanger is described, in which the corrosive gas flows in only one of two kinds of the flow channels provided in the heat exchanger. However, the present invention is not limited thereto, and, for example, it may be applied to a heat exchanger, in which a corrosive fluid of high temperature flows in one fluid channel, while a corrosive fluid of low temperature flows in another fluid channel.

In the above embodiments, the composition in the clad layer 3 of the clad sheet 1 and the mixture powder F is described as 13 wt% of chromium, 4 wt% of silicon, and 6 wt% of phosphorus, and the remainder being nickel and inevitable impurities. However, the present invention is not limited thereto.
For example, if the clad layer 3 and the mixture powder F contain 13 to 18 wt% of chromium, the clad layer 3 exercises particularly preferable corrosion resistance.
Also, if the clad layer 3 and the mixture powder F contain 3 to 4 wt% of silicon and the clad layer 3 and the mixture powder F contain 4 to 7 wt% of phosphorus, the clad layer 3 exercises particularly preferable brazing properties. For this reason, the composition may be arbitrarily modified so that each component falls in the above range. As one example, the clad layer 3 and the mixture powder F may be composed of 20 wt% of the alloy powder F1, 30 wt% of the nickel powder F2, the silicon powder F3, 40 wt% of the BNi-7 powder F4 (molten portion Y), and 7 wt% of the chromium powder. In this case, the composition of the clad layer 3 and the mixture powder F includes 19 wt% of chromium, 5 wt% of silicon, 5 wt% of phosphorus, and the remainder being nickel. Also, this case can exercise the same effect as that of the clad sheet 1 described in the above embodiments.

In the above embodiments, after compression-bonding process is performed, in which the mixture powder F is compressively bonded to the metal plate 2 by the rolling rollers 10A and 10B, the BNi-7 powder F4 is molten by performing the heating process using the heating furnace 30, so that the alloy powder F1 is firmly fixed to the metal plate 2. However, the present invention is not limited thereto, and the heating process may be omitted. In this case, the clad layer 3 is provided with the BNi-7 powder F4, instead of the molten portion Y.

In the above embodiments, the clad layer 3 is described as being formed on both surfaces of the metal plate 2. However, the present invention is not limited thereto, and the clad layer 3 may be formed on either one surface of the metal plate 2.

In the above embodiments, the forming apparatus supplies the mixture powder F to the rolling rollers 10A and 10B by the use of the belt feeders 20A and 20B. However, the present invention is not limited thereto, and anything may be used as long as it can feed the mixture powder F in fixed amounts to the rolling rollers 10A and 10B. For example, a screw feeder or roll feeder may be employed, instead of the belt feeders 20A and 20B.

In the above embodiments, it is described that a ratio of the alloy powder F1, the nickel powder F2 and the silicon powder F3 contained in the mixture powder F is identical to that of each powder contained in the clad layer 3, and a ratio of the BNi-7 powder F4 is identical to that of the molten portion Y included in the clad layer 3. However, there is a possibility that an amount of the nickel powder F2 contained in the clad layer 3 may be decreased by reaction of the BNi-7 powder F4 and the nickel powder F2 due to the heating. In this case, for example when the mixture powder contains 30 wt% of nickel powder F2, there is a possibility that the nickel powder F2 included in the clad layer 3 is reduced to 20 wt%.

### INDUSTRIAL APPLICABILITY

With the heat exchanger according to the present invention, since it is not necessary to increase the thickness of a partitioning plate so as to ensure corrosion resistance, a heat exchanger having a flow channel through which a corrosive fluid flows can be reduced in size and have high performance. Also, since it is not necessary to dispose a brazing material on the partitioning plate, the heat exchanger can be easily manufactured.
By the method of manufacturing a heat exchanger according to the present invention, the process of manufacturing the heat exchanger having a flow channel through which the corrosive fluid flows can be simplified.
Also, in the EGR system according to the present invention, since the heat exchanger in the present invention including the partitioning plate made of at least a clad sheet is employed as an EGR cooler, it is possible to reduce the size of the heat exchanger and have high performance.

## Claims

1. A heat exchanger comprising a partitioning plate and flow channels of at least two systems which are partitioned by the partitioning plate, wherein
the partitioning plate is made of a clad sheet having a base material made of stainless steel or a nickel-based alloy, and a clad layer having brazing properties and corrosion resistance to a corrosive fluid, an entire surface of the base material which is exposed to the flow channel of at least one system being coated by the clad layer.

2. The heat exchanger according to Claim 1, further comprising a fin installed in the flow channel, the fin being made of the clad sheet.

3. The heat exchanger according to Claim 1, wherein the partitioning plate is formed in the shape of a fin.

4. The heat exchanger according to Claim 1, wherein the corrosive fluid is combustion exhaust gas of an internal combustion engine, and cooling water flows through the flow channel other than the flow channel through which the combustion exhaust gas flows.

5. The heat exchanger according to Claim 1, wherein the clad layer includes at least chromium, silicon, phosphorus, and nickel as its components.

6. The heat exchanger according to Claim 5, wherein the clad layer consists of 13 to 18 wt% of chromium, 3 to 4 wt% of silicon, and 4 to 7 wt% of phosphorus, and the remainder being nickel and inevitable impurities.

7. A method of manufacturing a heat exchanger including a partitioning plate and flow channels of at least two systems which are partitioned by the partitioning plate, the method comprising:
a clad sheet forming step of forming a clad sheet having a base material made of stainless steel or a nickel-based alloy, and a clad layer having brazing properties and corrosion resistance to a corrosive fluid, an entire surface of the base material which is exposed to the flow channel of at least one system being coated by the clad layer;
a partitioning plate forming step for forming the partitioning plate by using the clad sheet; and
a flow channel forming step for forming the flow channels of at least two systems by using the formed partitioning plate through a brazing process, by which the clad layer of the partitioning plate is molten.

8. The method of manufacturing a heat exchanger according to Claim 7, further comprising a fin forming step for forming a fin by using the clad sheet,
wherein the flow channel forming step utilizes the formed partitioning plate and the formed fin, and forms the flow channels of at least two systems through a brazing process, by which the clad layers of the partitioning plate and the fin are molten.

9. The method of manufacturing a heat exchanger according to Claim 7, wherein in the partitioning plate forming step, the partitioning plate is formed in the shape of a fin.

10. The method of manufacturing a heat exchanger according to Claim 7, wherein the clad sheet forming step includes a compression-bonding step for compressively bonding mixture powder, which is obtained by mixing alloy powder including at least any one of chromium, silicon, and phosphorus as its components, and nickel powder, to the base material.

11. The method of manufacturing a heat exchanger according to Claim 10, wherein the mixture powder contains the nickel powder of 10 wt% or more.

12. The method of manufacturing a heat exchanger according to Claim 10, wherein a shape of the nickel powder has a plurality of protrusions.

13. The method of manufacturing a heat exchanger according to Claim 10, wherein a composition ratio of a sum total of the mixture powder including the plurality of kinds of components includes 13 to 18 wt% of chromium, 3 to 4 wt% of silicon, and 4 to 7 wt% of phosphorus, and the remainder being nickel and inevitable impurities.

14. The method of manufacturing a heat exchanger according to Claim 10, wherein the clad sheet forming step includes a heating step for heating the clad sheet after the compression-bonding step.

15. The method of manufacturing a heat exchanger according to Claim 14, wherein the mixture powder including the plurality of kinds of components includes at least BNi-7.

16. An EGR (Exhaust Gas Recirculation) system comprising an internal combustion engine, an intake flow channel for supplying combustible gas to at least the internal combustion engine, an exhaust flow channel for discharging combustion exhaust gas from the internal combustion engine, and an EGR cooler for cooling a part of the combustion exhaust gas and returning the part to the intake flow channel,
wherein the heat exchanger according to Claim 1 is used as the EGR cooler.
